# EUROPEAN PATENT APPLICATION

(11) **EP 4 254 881 A1**
(43) Date of publication of application: **04.10.2023**
(21) Application number: 20966227.9
(22) Date of filing: 21.12.2020
(51) Int. Cl.: H04L 12/46

(54) **ROUTING TRANSMISSION METHOD AND APPARATUS**

(71) Applicant: Huawei Technologies Co., Ltd., Shenzhen, Guangdong 518129 (CN)
(72) Inventor: GE, Jun, Shenzhen, Guangdong 518129 (CN); WANG, Haibo, Shenzhen, Guangdong 518129 (CN); WANG, Lili, Shenzhen, Guangdong 518129 (CN); LI, Lei, Shenzhen, Guangdong 518129 (CN)
(74) Representative: Gill Jennings & Every LLP
(86) International application number: PCT/CN2020/137999
(87) International publication number: WO 2022/133646

(57) **Abstract**

Embodiments of this application disclose a packet transmission method and apparatus. When obtaining a first BGP route, a first network device may directly send the first BGP route to a second network device without recursing the first BGP route. Alternatively, the first network device recurses the first BGP route. The first network device still sends the first BGP route to the second network device when the first BGP route fails to be recursed. That is, regardless of whether the first network device performs recursion or if the recursion fails, the first network device can forward the received first BGP route to the second network device, so that the second network device can learn the first BGP route without deploying an additional service. This improves efficiency of advertising the first BGP route by the first network device.

## Description

### TECHNICAL FIELD

This application relates to the field of communication technologies, and specifically, to a route transmission method and apparatus.

### BACKGROUND

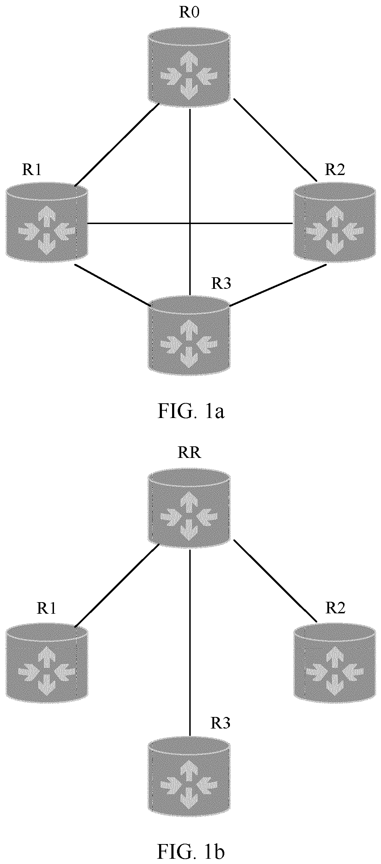

In a data transmission process, to ensure connectivity between internal border gateway protocol (internal border gateway protocol, IBGP) peers (peers), a full mesh needs to be established between the IBGP peers. As shown in FIG. 1a, one autonomous system (AS) includes four routers (IBGP peers). To ensure connectivity between the routers, six IBGP connections need to be established. When the AS includes a large quantity of routers, a large quantity of IBGP connections need to be established. Consequently, large quantities of network resources and controller resources are consumed. To resolve the foregoing problem, a route reflection solution is proposed. Specifically, in one AS, one router is used as a route reflector (route reflector, RR), and the other routers are used as clients to respectively establish IBGP connections to the RR. No IBGP connection needs to be established between the clients. The RR transmits (or reflects) routing information to each client. As shown in FIG. 1b, R0 serves as the RR, and separately establishes the IBGP connections to R1, R2, and R3.

During actual application, according to a current BGP protocol, after receiving a route, a network device needs to check reachability of a next hop of the route based on next hop information carried in the route, and forwards the route only when determining that the next hop of the route is reachable. In this way, for an RR supporting the BGP protocol, after receiving a route, the RR also needs to check reachability of a next hop of the route, and reflects the route only when determining that the next hop route is reachable. For example, as shown in FIG. 1b, after receiving routing information sent by R1, the RR needs to check whether a route from the RR to R1 is in an active state. When the route from the RR to R1 is in the active state, the RR reflects, to R2 and R3, the routing information sent by R1. However, in some application scenarios, the RR provides only a route reflection function, and does not need to forward a data packet. Check performed by the RR affects route advertisement efficiency. In addition, in some possible application scenarios, for example, in a scenario in which data of the internet protocol version 4 (internet protocol version 4, IPv4) is transmitted through a public network by using the segment routing over internet protocol version 6 (segment routing over internet protocol version 6, SRv6), the network device checks reachability of a route by using a segment identifier (segment identifier, SID) attribute. However, the RR usually does not have locator (locator) information. As a result, the RR cannot perform route recursion by using the SID. To ensure normal reflection of the routing information, a default route needs to be configured for the RR, so that the RR reflects a received route when determining that the default route is in the active state. In this way, workload of deploying an additional service is increased.

### SUMMARY

In view of this, embodiments of this application provide a route transmission method and apparatus, so that reachability of a next hop does not need to be checked, thereby reducing deployment of additional services.

To resolve the foregoing problem, embodiments of this application provide the following technical solutions.

According to a first aspect, a packet transmission method is provided. The method includes: A first network device obtains a first border gateway protocol BGP route. The first network device directly forwards the first BGP route to a second network device without recursing the first BGP route. Alternatively, the first network device recurses the first BGP route. The first network device still forwards the first BGP route to the second network device when the recursion fails. That is, in this implementation solution, the first network device may be any network device in a network. When the first BGP route needs to be broadcast, after obtaining the first BGP route, the first network device may determine, according to a locally configured policy, whether to recurse the first BGP route. Regardless of whether the first network device performs recursion or if the recursion fails, the first network device can forward the received first BGP route to the second network device, so that the second network device can learn the first BGP route without deploying an additional service. This improves efficiency of advertising the first BGP route by the first network device. For example, the first network device is a route reflector. When the route reflector does not participate in subsequent packet forwarding, the route reflector may directly forward the first BGP route to the second network device without recursing the first BGP route.

In a specific implementation, when the first network device successfully recurses the first BGP route, the method further includes: The first network device guides traffic forwarding based on the first BGP route. In this implementation, when the first network device participates in subsequent packet forwarding, after successfully recursing the first BGP route, the first network device may deliver the first BGP route to a forwarding plane, so that traffic may be forwarded based on the first BGP route when the traffic is received.

In a specific implementation, the first network device has a route reflection function. For example, the first network device is a route reflector. After receiving the first BGP route, the first network device may directly reflect the received first BGP route to the second network device without recursing the first BGP route.

In a specific implementation, first BGP route is used in a segment routing over internet protocol version 6 SRv6 network, and the first BGP route includes a first segment identifier SID used to indicate a destination network device. In this implementation, for the SRv6 network, each network device forwards a packet based on a segment identifier. Therefore, when the first BGP route is broadcast, the first BGP route includes the first segment identifier SID that indicates the destination network device, so that another network device may forward the packet to the destination network device based on the first segment identifier SID.

In a specific implementation, that the first network device still forwards the first BGP route to the second network device when the first network device fails to recurse the first BGP route includes: The first network device determines, based on the fact that the first SID is not locally stored, that the first BGP route fails to be recursed. The first network device forwards the first BGP route to the second network device. That is, in the SRv6 network, if the first network device does not store the first SID, the first network device does not have a capability of sensing the SID, and cannot perform route recursion based on the SID. In this case, it is determined that the first BGP route fails to be recursed.

In a specific implementation, when the first network device successfully recurses the first BGP route, the method further includes: The first network device replaces the first SID in the first BGP route with a second SID, to obtain an updated first BGP route. The first network device sends the updated first BGP route to the second network device. In this implementation, when the first network device successfully recurses the first BGP route, it indicates that the first network device has the capability of sensing the SID. If the corresponding second SID is allocated to the first network device, the first SID in the first BGP route is replaced with the second SID to update the first BGP route, so that the second network device can learn a route to the first network device.

In a specific implementation, that the first network device obtains a first BGP route includes: The first network device obtains the first BGP route from a third network device; and that the first network device guides traffic forwarding based on the first BGP route includes: The first network device determines, based on the first BGP route, an egress port used to reach the third network device, to guide forwarding of traffic sent to the third network device.

In a specific implementation, the first network device and the second network device are network devices on a segment routing over internet protocol version 6-best effort SRv6-BE tunnel; or the first network device and the second network device are network devices on a segment routing over internet protocol version 6-traffic engineering SRv6-TE tunnel.

In a specific implementation, the first BGP route is received from a third network device, and a segment routing over internet protocol version 6-best effort SRv6-BE tunnel is established between the third network device and the second network device; or a segment routing over internet protocol version 6-traffic engineering SRv6-TE tunnel is established between the third network device and the second network device.

In a specific implementation, the first network device and the second network device are external border gateway protocol EBGP neighbors, or the first network device and the second network device are internal border gateway protocol IBGP neighbors.

In a specific implementation, the first network device is a first route reflector RR.

In a specific implementation, the first network device is a level-1 RR or a level-2 RR.

In a specific implementation, the third network device is a first provider edge PE device, and the second network device is a second RR or a second PE device.

In a specific implementation, the first network device and the second network device are network devices used in a multicast virtual private network MVPN scenario.

According to a second aspect, an embodiment of this application provides a packet transmission apparatus. The apparatus includes: an obtaining unit, configured to obtain a first border gateway protocol BGP route; and a sending unit, configured to directly forward the first BGP route to a second network device without recursing the first BGP route, where the sending unit is further configured to still forward the first BGP route to the second network device when the first BGP route fails to be recursed.

In a specific implementation, when the first BGP route is successfully recursed, the sending unit is further configured to guide traffic forwarding based on the first BGP route.

In a specific implementation, the apparatus has a route reflection function.

In a specific implementation, first BGP route is used in a segment routing over internet protocol version 6 SRv6 network, and the first BGP route includes a first segment identifier SID used to indicate a destination network device.

In a specific implementation, when the first BGP route fails to be recursed, the sending unit is specifically configured to: determine, based on the fact that the first SID is not locally stored, that the first BGP route fails to be recursed; and forward the first BGP route to the second network device.

In a specific implementation, when the first BGP route is successfully recursed, the apparatus further includes: a processing unit, configured to replace the first SID in the first BGP route with a second SID, to obtain an updated first BGP route; and the sending unit is configured to send the updated first BGP route to the second network device.

In a specific implementation, the obtaining unit is specifically configured to obtain the first BGP route from a third network device, and the sending unit is specifically configured to determine, based on the first BGP route, an egress port used to reach the third network device, to guide forwarding of traffic sent to the third network device.

In a specific implementation, the apparatus and the second network device are network devices on a segment routing over internet protocol version 6-best effort SRv6-BE tunnel; or the apparatus and the second network device are network devices on a segment routing over internet protocol version 6-traffic engineering SRv6-TE tunnel.

In a specific implementation, the first BGP route is received from a third network device, and a segment routing over internet protocol version 6-best effort SRv6-BE tunnel is established between the third network device and the second network device; or a segment routing over internet protocol version 6-traffic engineering SRv6-TE tunnel is established between the third network device and the second network device.

In a specific implementation, the apparatus and the second network device are external border gateway protocol EBGP neighbors, or the apparatus and the second network device are internal border gateway protocol IBGP neighbors.

In a specific implementation, the apparatus is a first route reflector RR.

In a specific implementation, the apparatus is a level-1 RR or a level-2 RR.

In a specific implementation, the third network device is a first provider edge PE device, and the second network device is a second RR or a second PE device.

In a specific implementation, the apparatus and the second network device are network devices used in a multicast virtual private network MVPN scenario.

According to a third aspect, a communication device is provided. The communication device includes a processor and a memory. The memory is configured to store computer-readable instructions or a computer program. The processor is configured to read the computer-readable instructions or the computer program, to enable the communication device to implement the packet transmission method according to the first aspect.

According to a fourth aspect, a computer-readable storage medium including instructions or a computer program is provided. When the instructions or the computer program is run on a computer, the computer is enabled to perform the packet transmission method according to the first aspect.

According to the technical solutions provided in embodiments of this application, when obtaining the first BGP route, the first network device may directly send the first BGP route to the second network device without recursing the first BGP route. Alternatively, the first network device recurses the first BGP route. The first network device still sends the first BGP route to the second network device when the first BGP route fails to be recursed. That is, regardless of whether the first network device performs recursion or if the recursion fails, the first network device can forward the received first BGP route to the second network device, so that the second network device can learn the first BGP route without deploying an additional service. This improves efficiency of advertising the first BGP route by the first network device.

### BRIEF DESCRIPTION OF DRAWINGS

To describe the technical solutions in the specific implementations of the present invention or in the conventional technology more clearly, the following briefly describes the accompanying drawings for describing the specific implementations or the conventional technology. It is clear that the accompanying drawings in the following description show some specific implementations of the present invention, and a person of ordinary skill in the art may still derive other drawings from these accompanying drawings without creative efforts.
FIG. 1a is a schematic diagram of a full mesh in a BGP network architecture;
FIG. 1b is a schematic diagram of route reflection in a BGP network architecture;
FIG. 2a is a schematic diagram of an application scenario according to an embodiment of this application;
FIG. 2b is a schematic diagram of another application scenario according to an embodiment of this application;
FIG. 3 is a flowchart of route transmission according to an embodiment of this application;
FIG. 4 is another flowchart of route transmission according to an embodiment of this application;
FIG. 5 is a diagram of a structure of a packet transmission apparatus according to an embodiment of this application;
FIG. 6 is a diagram of a structure of a communication device according to an embodiment of this application; and
FIG. 7 is a diagram of a structure of another communication device according to an embodiment of this application.

### DESCRIPTION OF EMBODIMENTS

To make a person skilled in the art understand the technical solutions in the present invention better, the following clearly and completely describes the technical solutions in embodiments of the present invention with reference to the accompanying drawings in embodiments of the present invention. It is clear that the described embodiments are merely some rather than all of embodiments of the present invention. Embodiments based on the present invention should all fall into the protection scope of the present invention.

For ease of understanding specific implementation of this application, the following first describes network elements and technical names used in this application.

A segment routing (segment routing, SR) protocol is a source routing protocol. A source node specifies a path for an application packet, converts the path into an ordered segment (Segment) list, and encapsulates the list into a packet header. An intermediate node on the path needs to perform forwarding based only on the path specified in the packet header. A basic concept of the SR is to divide a network into different segments (Segments), and splice these segments to guide forwarding of the packet along the specified path. Specifically, a segment identifier (segment identifier, SID) is used to identify a segment. The SR deployed on an IPv6 data plane may be referred to as an SRv6 technology.

During application of SRv6, forwarding path information is carried in a segment routing header (segment routing header, SRH) that includes a segment identifier list (SID list). The SID list includes a plurality of sequentially arranged segment identifiers (SIDs), which respectively represent a plurality of segments, and each segment is an instruction or an instruction set for processing a packet. Each SID may include a locator (locator) field and a function (function) field. Content of the locator field may also be referred to as a locator for short, is an identifier allocated to a network node in a network topology, and is used to identify the network node in the network topology. Content of the function field may also be referred to as a function for short, is used to indicate an instruction or an instruction set for processing a packet, and is equivalent to an operation code of a computer instruction. When the instruction or instruction set represented by the function is executed on the network node, the network node is enabled to perform a corresponding forwarding behavior (behavior).

A multicast virtual private network (multicast virtual private network, MVPN) means that a multicast service is implemented in a virtual private network (VPN) of aborder gateway protocol (BGP)/multi-protocol label switching (multi-protocol label switching, MPLS) network. In the MVPN network, a plurality of data bearer modes, such as a BGP-based or tunnel-based signaling transmission mode, a protocol independent multicast-sparse mode (protocol independent multicast-sparse mode, PIM-SM), a protocol independent multicast-source specific multicast (protocol independent multicast-source specific multicast, PIM-SSM), and a multicast label distribution protocol (multicast label distribution protocol, MLDP), are provided.

Route recursion (route recursion) indicates that a next hop of a route generated by the BGP protocol may not be a network device directly connected to a current router due to particularity of the BGP protocol. A common reason is that when any two neighboring routers are internal border gateway protocol (Internal BGP, IBGP) neighbors, a next hop is not changed when routing information is advertised. In this case, to correctly forward a packet, the router needs to find a directly reachable address, and send the packet to a network device corresponding to a next hop indicated in a route forwarding table by using this address. In the foregoing process, a route to the directly reachable address is referred to as a dependent route. A BGP route depends on these routes to guide packet forwarding. The process of finding the dependent route based on a next hop address is referred to as route recursion.

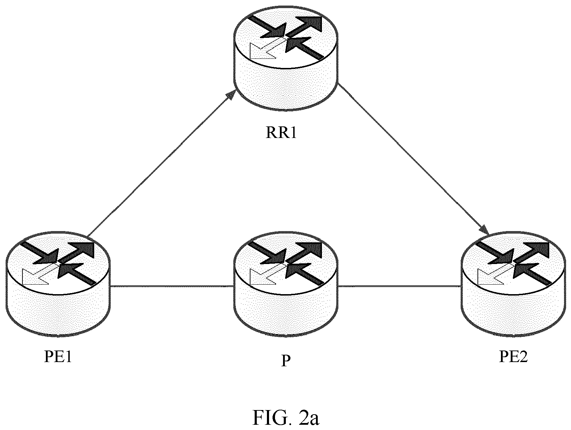

FIG. 2a is a schematic diagram of an application scenario. An example in which a network system includes a level-1 route reflection device is used for description. Specifically, a route reflection device RR1, a network device PE1, a network device PE2, and a network device P are included. The network device PE1 and the network device PE2 serve as clients corresponding to the route reflection device RR1, and PE1 and PE2 are peers of each other. The network device P is a forwarding device between the network device PE1 and the network device PE2, for example, may be a backbone device in a service provider network. RR1, PE1, and PE2 may be network devices on a segment routing over IPv6-best effort (segment routing best-effort, SRv6-BE) tunnel; or RR1, PE1, and PE2 may be network devices on a segment routing over IPv6-traffic engineering (segment routing traffic engineering SRv6-TE) tunnel.

In a possible case, the route reflection device RR1 has a route reflection function, but does not have a traffic forwarding function. In this case, RR1 reflects a BGP route received from PE1 to PE2, but does not guide subsequent traffic forwarding. Alternatively, in another possible case, RR1 has both a route reflection function and a forwarding function. In this case, RR1 not only sends a BGP route received from PE1 to PE2, but also establishes a route to PE1, to guide subsequent traffic forwarding. In this case, RR1 may actually serve as a forwarding node between PE1 and PE2. For example, RR1 and the device P in FIG. 2a may be a same network device in this case. Therefore, the device P has components for implementing both the route reflection function and the traffic forwarding function.

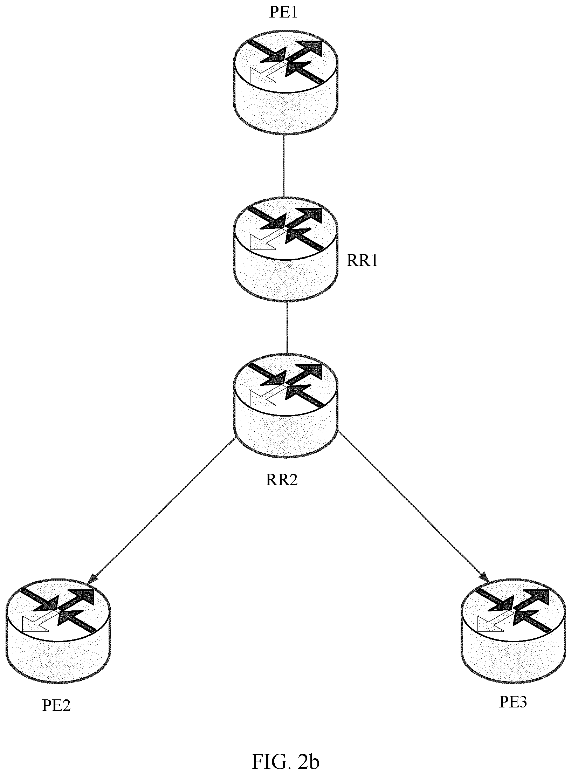

For another example, FIG. 2b is a schematic diagram of another application scenario. An example in which a network system includes two levels of route reflection devices is used for description. Specifically, the network system includes a level-1 route reflection device RR1 and a level-2 route reflection device RR2. The level-1 route reflection device RR1 is connected to PE1 and RR2 separately. In this case, PE1 and RR2 may also be referred to as clients of RR1 relative to RR1, and PE1 and RR2 are peers of each other. The level-2 route reflection device RR2 is connected to PE2 and PE3 separately. In this case, PE2 and PE3 are network devices that function as clients relative to RR2, and PE2 and PE3 are peers of each other. PE1, RR1, RR2, and PE2 may be network devices on an SRv6-BE tunnel, and PE1, RR1, RR2, andPE3 may be network devices on another SRv6-BE tunnel. Alternatively, PE1, RR1, RR2, and PE2 may be network devices on an SRv6-TE tunnel, and PE1, RR1, RR2, and PE3 may be network devices on another SRv6-TE tunnel.

Each network device included in the systems shown in FIG. 2a and FIG. 2b may also be referred to as a node, and is a device that has the route reflection function and/or a packet forwarding function in the network systems, for example, may be a router, a switch, a forwarder, a reflector, or a label switching router (label switching router, LSR). A function that can be implemented by each node may be specifically set based on an actual application scenario and a requirement. In the application scenario shown in FIG. 2a, there is a route transmission path: PE1-RR-PE2. In the application scenario shown in FIG. 2b, there are two route transmission paths: PE1-RR1-RR2-PE2 and PE1-RR1-RR2-PE3.

For ease of understanding, the structure of the network system shown in FIG. 2b is as an example below for description. For example, PE1 is a first node 201, RR1 is a second node 202, RR2 is a third node 203, and PE2 or PE3 is a fourth node 204. In the following embodiment, the named roles of the first node 201, the second node 202, the third node 203, and the fourth node 204 are mainly used to distinguish between and describe corresponding functions that can be executed by the network devices of different roles in a process of advertising a BGP route. The locations and a quantity of network devices of different roles in a network topology may be specifically determined based on different service scenarios. In some possible scenarios, a quantity of network devices of a role on a transmission path may be 0.

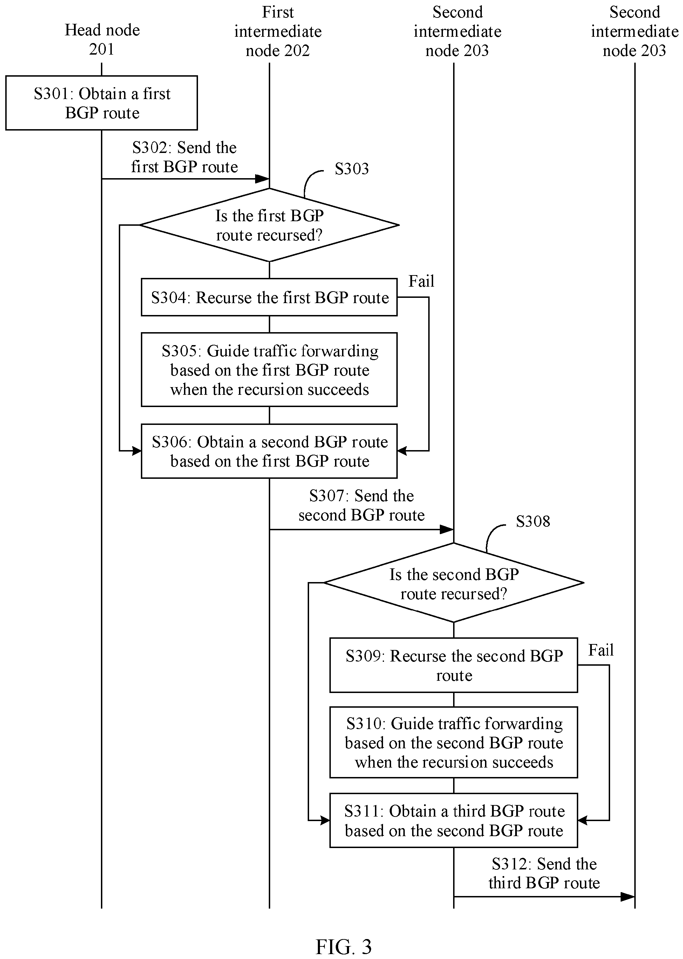

FIG. 3 is a flowchart of a route transmission method according to an embodiment of this application. As shown in FIG. 3, the method may include the following steps.

S301: The first node 201 obtains a first BGP route.

In this embodiment, when the first node 201 is a corresponding egress device during packet transmission, the first node 201 may generate the first BGP route. The first BGP route may carry a device identifier of the first node 201, and the device identifier may uniquely identify the first node 201, for example, an interface internet protocol (Internet protocol, IP) address or a loopback (loopback) address of the first node 201. As the first node 201 advertising the route, a VPN route in the first BGP route may further carry a service identifier allocated by the first node 201, for example, a VPN identifier, so that a neighboring node in a network may learn a VPN route to the first node 201, and may include the service identifier in a packet of a service sent to the first node 201, for example, include the service identifier in a destination address (destination address, DA) field, to indicate the first node 201 to receive and forward the packet.

In an example, when the first node 201 is located in an MVPN network, the device identifier carried in a next hop attribute field in the first BGP route may be an interface address, a loopback address, or the like of the first node 201. FIG. 2b is used as an example. The first node 201 is the network device PE1, and a loopback address corresponding to the network device PE1 is 1::1\128. In this case, a next hop field in the first BGP route is 1::1\128.

In another example, when the first node 201 is located in an SRv6 network, the device identifier may be a segment identifier SID indicating a network device, namely, a segment identifier SID corresponding to the first node 201. FIG. 2b is used as an example. The first node 201 is the network device PE1, and a segment identifier SID corresponding to the network device PE1 is 1001:: 1. In this case, a first segment identifier SID in the first BGP route is 1001:: 1. Further, when the first node 201 is a network device on an SRv6-BE tunnel, and advertises the first BGP route, a segment identifier SID corresponding to the destination address DA field in the first BGP route remains unchanged, and indicates the first node 201, so that each node in the network can learn a route to the first node 201. When the first node 201 is a network device on an SRv6-TE tunnel, in a process in which the first node 201 advertises the first BGP route, a segment identifier corresponding to the destination address DA field in the first BGP route continuously changes. When each node in the network receives a BGP route sent by a neighboring node of the node, if an intermediate node has a corresponding segment identifier, the intermediate node may update the DA field in the first BGP route. In this way, the segment identifier corresponding to the DA field is a segment identifier of a current node, so that a neighboring node corresponding to the intermediate node can learn a route to the intermediate node when receiving the BGP route sent by the intermediate node.

S302: The first node 201 sends the first BGP route to the second node 202.

The first node 201 obtains the first BGP route corresponding to the first node 201, and advertises the first BGP route to another neighboring node in the network according to a BGP routing protocol, so that the another neighboring node can learn the route to the first node 201, to establish a forwarding path to the first node 201. The first node 201 and the second node 202 may be external border gateway protocol (external BGP, EBGP) neighbors, that is, the first node 201 and the second node 202 respectively belong to different autonomous systems (autonomous systems, ASs). For example, the first node 201 is located in an AS1 domain, and the second node 202 is located in an AS2 domain. Alternatively, the first node 201 and the second node 202 may alternatively be IBGP neighbors, that is, the first node 201 and the second node 202 belong to a same AS domain.

S303: The second node 202 determines whether to recurse the first BGP route, and if determines to recurse the first BGP route, performs S304, or if determines not to recurse the first BGP route, performs S306.

In this embodiment, to resolve a problem that route reflection efficiency is low in some possible application scenarios because the second node 202 forwards the received first BGP route to another node only when the recursion succeeds, a forwarding policy for the first BGP route may be pre-configured on the second node 202. For example, the second node 202 is configured not to recurse the first BGP route when receiving the first BGP route; or the second node 202 is configured to recurse the first BGP route when receiving the first BGP route, and still forward the received first BGP route to another node when the recursion fails.

In an example, when the second node 202 has only a route reflection function, for example, the second node 202 is a route reflector, the second node 202 may be configured not to recurse the first BGP route.

In another example, when the second node 202 has both a route reflection function and a forwarding function, for example, the second node 202 is RR1 having the route reflection function in FIG. 2b and RR1 is also used as a packet forwarding node in the network, the second node 202 is configured to recurse the first BGP route. In this case, to ensure normal forwarding of the route, the second node 202 may be further configured to still perform S306 even if the second node 202 fails to recurse the first BGP route, to obtain a second BGP route based on the first BGP route.

The foregoing examples are merely used as an implementation. In another possible application scenario or design manner, a user may configure the second node 202 in a different manner based on an actual application situation. For example, when the second node 202 receives the first BGP route sent by the first node 201, the second node 202 considers by default that the first BGP route is in an active state, and directly performs S306 to obtain the second BGP route without performing a recursion operation.

When obtaining the first BGP route, the second node 202 may determine, based on configuration on the second node 202, whether to recurse the first BGP route. If determining that the recursion operation needs to be performed on the first BGP route, the second node 202 performs S304; or if determining that the recursion operation does not need to be performed on the first BGP route, the second node 202 performs S306. The recursion on the first BGP route includes: The second node 202 searches a routing forwarding table based on the first BGP route, to determine whether an egress port to the first node 201 exists. For example, in the MVPN network, the second node 202 searches, based on the next hop information in the first BGP route, for the egress port to the first node 201; or in the SRv6 network, the second node 202 searches, based on the first segment identifier SID in the first BGP route, for the egress port to the first node 201.

S304: The second node 202 recurses the first BGP route, and performs S306 when a recursion result is that the recursion fails; or performs S305 when a recursion result is that the recursion succeeds.

In this embodiment, when the second node 202 needs to recurse the first BGP route, the second node 202 searches the routing forwarding table based on the device identifier in the first BGP route, to determine whether an egress port to a next hop node (the first node 201) exists. If the routing forwarding table of the second node 202 does not include the egress port to the first node 201, the second node 202 fails to recurse the first BGP route, and the second node 202 performs S306; or if the routing forwarding table of the second node 202 includes the egress port to the first node 201, the second node 202 successfully recurses the first BGP route, and the second node 202 performs S305.

That the recursion fails may include the following examples:

For example, each node in the SRv6 network guides packet forwarding based on the SID carried in the packet instead of based on the next hop information. Therefore, the node in the SRv6 network recurses the route based on the SID in a route advertisement process. However, some nodes in the SRv6 network, for example, a node that only reflects the route but does not have a capability of sensing the SID, cannot recurse the route based on the SID. That is, such node fails to recurse the route based on the SID. Based on this, that the second node 202 fails to recurse the first BGP route may be that the second node 202 determines, based on the fact that the first SID is not locally stored, that the first BGP route fails to be recursed. To be specific, the second node 202 obtains the first SID from the first BGP route, and searches a routing forwarding table corresponding to the second node 202 for an egress port corresponding to the first SID. If an entry including the first SID is not stored in the routing forwarding table, the routing forwarding table cannot be matched, and therefore the route fails to be recursed. If the first SID exists in an entry of the routing forwarding table, an egress port to the network device corresponding to the first SID may be determined through searching, and the recursion succeeds, so that the second node 202 may subsequently guide forwarding of traffic to the first node 201 based on the egress port.

In another example, in the MVPN network, that the second node 202 fails to recurse the first BGP route may be that the second node 202 fails to recurse the route based on the next hop information carried in the first BGP route.

S305: The second node 202 guides traffic forwarding based on the first BGP route.

In this embodiment, when the second node 202 successfully recurses the first BGP route and the second node 202 further has the forwarding function, the second node 202 delivers, to a forwarding plane, a forwarding route to the first node 201, so that the forwarding plane sends traffic to the first node 201 based on the delivered route.

S306: The second node 202 obtains the second BGP route based on the first BGP route.

In this embodiment, if the second node 202 does not recurse the first BGP route, the second node 202 directly obtains the second BGP route based on the first BGP route; when the second node 202 fails to recurse the first BGP route, the second node 202 may alternatively obtain the second BGP route based on the first BGP route; or when the second node 202 successfully recurses the first BGP route, the second node 202 may obtain the second BGP route based on the first BGP route.

That the second node 202 obtains the second BGP route based on the first BGP route may include the following application scenarios:

In an example, when the second node 202 does not recurse the first BGP route, but directly obtains the second BGP route based on the first BGP route, or when the second node 202 fails to recurse the first BGP route, the second node 202 modifies only content of a BGP attribute in the first BGP route, for example, adds a router identifier (router identifier) or other identifier information of the second node 202 in the BGP attribute to a BGP cluster list (cluster list) attribute. The cluster list may be used to avoid a loop. In this example, the second node 202 does not modify the next hop information or the segment identifier in the first BGP route, to obtain the second BGP route. In this example, the second node 202 may have only the route reflection function, or the second node 202 may be configured, based on another requirement, not to recurse the BGP route or to still forward the BGP route when the recursion fails.

In another example, when the second node 202 successfully recurses the first BGP route, the second node 202 may obtain the second BGP route in the following manners. In a possible case, the second node 202 may modify the next hop information or the segment identifier in the first BGP route, to obtain the second BGP route. Specifically, the following scenario may be included. The second node 202 has both the route reflection function and the forwarding function. When the second node 202 and the third node 203 are EBGP neighbors, before sending the first BGP route to the third node 203, the second node 202 changes the next hop information or the segment identifier in the first BGP route from the first node 201 to the second node 202. For example, when the second node 202 is a node in the MVPN network, the second node 202 may modify the next hop information in the first BGP route to a device identifier corresponding to the second node 202, where the device identifier may be an interface address, a loopback address, or the like of the second node 202. Alternatively, when the second node 202 is a node in the SRv6 network and the second node 202 has a corresponding second segment identifier SID, the second node 202 replaces the first SID in the first BGP route with the second SID, to obtain an updated first BGP route, namely, the second BGP route. In another possible case, the second node 202 may modify only the content of the BGP attribute in the first BGP route, for example, modify information about forwarding of the BGP route, and does not modify the next hop information or the segment identifier in the first BGP route, to obtain the second BGP route. That the next hop information or the segment identifier in the first BGP route is not modified may include the following application scenario: The second node 202 and the first node 201 belong to different BGP domains, that is, are EBGP peers. The second node 202 and the third node 203 belong to a same BGP domain, that is, are IBGP peers. That is, when the second node 202 sends a route learned from the EBGP peer to the IBGP peer, the second node 202 does not modify the next hop information or the segment identifier in the first BGP route. For example, the first node 201 belongs to an autonomous system AS65022, and the second node 202 and the third node 203 belong to an autonomous system AS65300. In this case, the second node 202 may not modify the next hop information or the segment identifier in the first BGP route, and a next hop in the first BGP route is still the first node 201.

In the MVPN network, the second node 202 usually does not modify the next hop information in the first BGP route, even if the second node 202 and the third node 203 are EBGP neighbors.

S307: The second node 202 sends the second BGP route to the third node 203.

After obtaining the second BGP route, the second node 202 advertises the second BGP route to the EBGP neighbor or the IBGP neighbor according to the BGP routing protocol, so that another node may learn the route to the first node 201 or the route to the second node 202. Specifically, when a next hop in the second BGP route is the first node 201, the third node 203 may learn the route to the first node 201; when a next hop node in the second BGP route is the second node 202, the third node 203 may learn the route to the second node 202.

S308: The third node 203 determines whether to recurse the second BGP route, and if determines to recurse the second BGP route, performs S309; or if determines not to recurse the second BGP route, performs S311.

In this embodiment, when obtaining the second BGP route, the third node 203 may determine, based on configuration on the third node 203, whether to recurse the second BGP route. For example, when the third node 203 has only the route reflection function, the third node 203 may be configured not to recurse the second BGP route. When the third node 203 has both the route reflection function and the forwarding function, the third node 203 may be configured to recurse the second BGP route. For a specific implementation of configuring the recursion operation for the third node 203, refer to related descriptions in S303.

S309: The third node 203 recurses the second BGP route, and performs S311 when a recursion result is that the recursion fails; or performs S310 when a recursion result is that the recursion succeeds.

In this embodiment, when the third node 203 needs to recurse the second BGP route, the third node 203 may search the routing forwarding table based on next hop information or a segment identifier in the second BGP route, to determine whether an egress port to a next hop node (the first node 201 or the second node 202) exists. If the egress port to the next hop node does not exist in the routing forwarding table of the third node 203, the third node 203 fails to recurse the second BGP route, and performs S310. If the egress port to the next hop node exists in the routing forwarding table of the third node 202, the third node 203 successfully recurses the second BGP route, and performs S309. In the SRv6 network, the third node 203 may also perform recursion based on SID information. If the second BGP route fails to be recursed, the third node 203 may determine, based on the fact that the first SID or the second SID is not locally stored, that the second BGP route fails to be recursed. For a specific implementation in which the third node 203 fails to recurse the second BGP route, refer to related descriptions in S304.

S310: The third node 203 guides traffic forwarding based on the second BGP route.

In this embodiment, when the third node 203 successfully recurses the second BGP route and the third node 203 is further configured to forward the traffic, the third node 203 delivers, to the forwarding plane, the forwarding path to the first node 201 or a forwarding path to the second node 202, so that the forwarding plane sends the traffic to the first node 201 or the second node 202 based on path information.

S311: The third node 203 obtains a third BGP route based on the second BGP route.

In this embodiment, if the third node 203 does not recurse the second BGP route, the third node 203 directly obtains the third BGP route based on the second BGP route; the third node 203 recurses the second BGP route, and the third node 203 may obtain the third BGP route based on the second BGP route when the recursion fails; or when the third node 203 successfully recurses the second BGP route, the third node 203 may obtain the third BGP route based on the second BGP route.

The third node 203 obtains the third BGP route based on the second BGP route. For a process of obtaining the third BGP route based on the second BGP route, refer to related descriptions of obtaining, by the second node 202, the second BGP route based on the first BGP route in S306.

S312: The third node 203 sends the third BGP route to the fourth node 204.

In this embodiment, after receiving the third BGP route, the fourth node 204 may perform the following operation: The fourth node 204 does not perform forwarding after receiving the third BGP route. For example, the fourth node 204 is a network device connected to user equipment, for example, PE2 or PE3 in FIG. 2b. In this case, the fourth node 204 may recurse the third BGP route. When the recursion succeeds, a route to the third node 203 may be established, and information about the route is delivered to the forwarding plane, so that the forwarding plane sends the traffic to the third node 203.

It may be understood that the foregoing case is merely used as an example, and a processing operation performed by the fourth node 204 on the third BGP route may be determined with reference to a specific application scenario.

In this embodiment, the network system shown in FIG. 2b is used as an example for description. When an actual application scenario is the architecture of the network system shown in FIG. 2a, after obtaining the first BGP route, PE1 used as the first node 201 sends the first BGP route to RR1 used as the second node 202, where RR1 in FIG. 2a is a route reflector having only the route reflection function. The second node 202 may not recurse the first BGP route, but directly obtain the second BGP route based on the first BGP route, and send the second BGP route to the fourth node 204. For a specific implementation, refer to related descriptions in S301 to S305 and S311. Alternatively, the method provided in this embodiment may also be used in an architecture of a possible network system. For example, the network system includes more than three levels of RRs, and each level of RR may send, by using a corresponding method provided in this embodiment, a BGP route to a lower-level network device. The lower-level network device may be, for example, an RR having the route reflection function, or may be a client without the route reflection function.

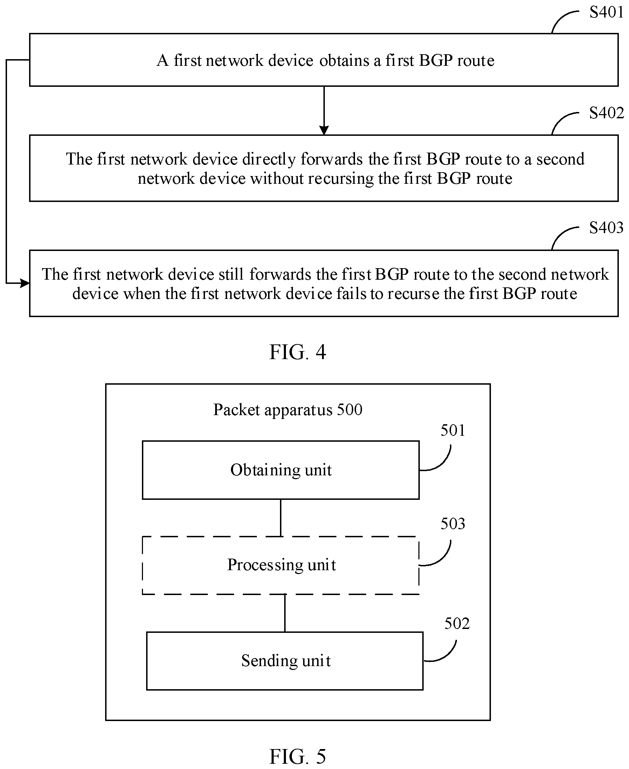

For ease of understanding the technical solutions provided in embodiments of this application, refer to FIG. 4. FIG. 4 is a flowchart of another route transmission method according to an embodiment of this application. As shown in FIG. 4, the method may include the following steps.

S401: A first network device obtains a first BGP route.

In this implementation, the first network device may be the first node 201, the second node 202, or the third node 203 described in the foregoing embodiment.

When the first network device is the first node 201, that a first network device obtains a first BGP route may be: The first network device generates the first BGP route, or obtains the first BGP route from a controller. For a specific implementation in which the first network device obtains the first BGP route, refer to S301.

When the first network device is the second node 202, the first network device may receive a BGP route sent by a third network device that serves as an upper-level neighboring node. For example, the first network device is the second node 202, and the upper-level neighboring node is the first node 201. After generating the first BGP route, the first node 201 sends the first BGP route to the first network device. For a specific implementation in which the first network device obtains the first BGP route, refer to S302.

When the first network device is the third node 203, the first network device may receive a BGP route sent by a third network device that serves as an upper-level neighboring node. For example, the first network device is the third node 203, and the upper-level neighboring node is the second node 202. After obtaining a second BGP route, the second node 202 sends the second BGP route to the first network device. For a specific implementation in which the first network device obtains the first BGP route, refer to S306.

In a specific implementation, when the first BGP route is used in an SRv6 network, the first BGP route includes a first segment identifier SID used to indicate a destination network device.

S402: The first network device directly forwards the first BGP route to a second network device without recursing the first BGP route.

In this embodiment, when the first network device does not need to recurse the first BGP route, the first network device may directly forward the first BGP route to the second network device. For example, the first network device has only a route reflection function. For a specific implementation in which the first network device directly forwards the first BGP route to the second network device, refer to S306 or S311.

S403: The first network device still forwards the first BGP route to the second network device when the first network device fails to recurse the first BGP route.

In this embodiment, when the first network device needs to recurse the first BGP route and the recursion fails, to ensure that the first BGP route can still be advertised to another neighboring node, the first network device continues to forward the first BGP route to the second network device. For a specific implementation in which the first network device continues to forward the first BGP route to the second network device, refer to S306 or S311.

In a specific implementation, that the first network device still forwards the first BGP route to the second network device when the first network device fails to recurse the first BGP route includes: The first network device determines, based on the fact that the first SID is not locally stored, that the first BGP route fails to be recursed. The first network device forwards the first BGP route to the second network device. Alternatively, in some possible application scenarios, for example, in an MVPN network, the first network device may alternatively perform route recursion based on next hop information carried in the first BGP route, and determine that the first BGP route fails to be recursed.

In a specific implementation, when the first network device successfully recurses the first BGP route, the first network device may guide traffic forwarding based on the first BGP route. For example, the first network device searches for an egress port to a next hop in the first BGP route based on the first BGP route, and delivers information about the egress port to the next hop to a forwarding plane, to facilitate subsequent traffic forwarding.

In a specific implementation, when the first network device is an intermediate node, the first network device obtains the first BGP route from the third network device. In this case, that the first network device guides traffic forwarding based on the first BGP route may be: The first network device determines, based on the first BGP route, an egress port used to the third network device, to guide forwarding of traffic sent to the third network device based on the egress port. For example, when the first network device is the third node 203, the first network device may obtain the second BGP route from the second node 202, and the first network device determines an egress port to the second node 202 based on the second BGP route.

An SRv6-BE tunnel is established between the third network device and the second network device, or an SRv6-TE tunnel is established between the third network device and the second network device. For example, the third network device is PE1 in FIG. 2b, the second network device is PE2 or PE3 in FIG. 2b, the SRv6-BE tunnel is established between PE1 and PE2, and the SRv6-TE tunnel is established between PE1 and PE3.

In a specific implementation, when the first network device successfully recurses the first BGP route and the first network device has a corresponding segment identifier, namely, a second SID, before the first network device forwards the first BGP route to the second network device, the first network device replaces the first SID in the first BGP route with the second SID to obtain an updated first BGP route, and forwards the updated first BGP route to the second network device. For an implementation of obtaining the updated first BGP route, refer to related descriptions in S306 or S310.

In a specific implementation, the first network device and the second network device are network devices on the SRv6-BE tunnel; or the first network device and the second network device are network devices on the SRv6-TE tunnel.

In a specific implementation, the first network device and the second network device are EBGP neighbors, or the first network device and the second network device are IBGP neighbors.

In a specific implementation, the first network device may be a first route reflector RR. For example, the first network device is RR1 in FIG. 2a or RR1 or RR2 in FIG. 2b.

In a specific implementation, the first network device is a level-1 RR or a level-2 RR. For example, the first network device is RR1 or RR2 in FIG. 2b.

In a specific implementation, the third network device may be a first provider edge (provider equipment, PE device), and the second network device may be a second RR or a second PE device. For example, the third network device may be PE1 in FIG. 2a, and the second network device may be RR1 or PE2 in FIG. 2a.

In a specific implementation, the first network device and the second network device are network devices used in a multicast virtual private network MVPN scenario.

Based on the foregoing method embodiments, an embodiment of this application provides a packet transmission apparatus, which is described below with reference to the accompanying drawings.

FIG. 5 is a schematic diagram of a structure of a packet transmission apparatus according to an embodiment of this application. The apparatus 500 can be applied to a first network device to perform the functions of the first network device in the embodiment shown in FIG. 4. The apparatus 500 may include an obtaining unit 501 and a sending unit 502.

The obtaining unit 501 is configured to obtain a first border gateway protocol BGP route.

When the first network device to which the apparatus 500 is applied is the first node 201, for a specific implementation of obtaining the first BGP route by the obtaining unit 201, refer to S301 in the embodiment shown in FIG. 3. When the first network device to which the apparatus 500 is applied is the second node 202, the third node 203, or the fourth node 204, for a specific implementation of obtaining the first BGP route by the obtaining unit 501, refer to S302, S307, or S312.

The sending unit 502 is configured to directly forward the first BGP route to a second network device without recursing the first BGP route.

The sending unit 502 is further configured to still forward the first BGP route to the second network device when the first BGP route fails to be recursed.

For a specific implementation of the sending unit 502, refer to related descriptions in S306 and S307, or S311 and S312.

In a possible implementation, when the first BGP route is successfully recursed, the sending unit 502 is further configured to guide traffic forwarding based on the first BGP route.

For a specific implementation in which the sending unit 502 guides traffic forwarding based on the first BGP route, refer to related descriptions in S305 or S310.

In a possible implementation, the apparatus has a route reflection function.

The first network device to which the apparatus 500 is applied may have the route reflection function. For example, the first network device is the second node 202 or the third node 203.

In a possible implementation, first BGP route is used in a segment routing over internet protocol version 6 SRv6 network, and the first BGP route includes a first segment identifier SID used to indicate a destination network device.

In a possible implementation, when the first BGP route fails to be recursed, the sending unit 502 is specifically configured to: determine, based on the fact that the first SID is not locally stored, that the first BGP route fails to be recursed; and forward the first BGP route to the second network device.

For a specific implementation of the sending unit 502, refer to related descriptions in S304 or S309.

In a possible implementation, when the first BGP route is successfully recursed, the apparatus further includes: a processing unit 503. The processing unit 503 is configured to replace the first SID in the first BGP route with a second SID, to obtain an updated first BGP route; and the sending unit 502 is configured to send the updated first BGP route to the second network device.

For a specific implementation of the processing unit 503 and the sending unit 502, refer to related descriptions in S306 or S311.

In a possible implementation, the obtaining unit 501 is specifically configured to obtain the first BGP route from a third network device, and the sending unit 502 is specifically configured to determine, based on the first BGP route, an egress port used to reach the third network device, to guide forwarding of traffic sent to the third network device.

For a specific implementation of the obtaining unit 501, refer to related descriptions in S307 or S312. For a specific implementation of the sending unit 502, refer to related descriptions in S305 or S310.

In a possible implementation, the apparatus and the second network device are network devices on a segment routing over internet protocol version 6-best effort SRv6-BE tunnel; or the apparatus and the second network device are network devices on a segment routing over internet protocol version 6-traffic engineering SRv6-TE tunnel.

In a possible implementation, the first BGP route is received from a third network device, and a segment routing over internet protocol version 6-best effort SRv6-BE tunnel is established between the third network device and the second network device; or a segment routing over internet protocol version 6-traffic engineering SRv6-TE tunnel is established between the third network device and the second network device.

In a possible implementation, the apparatus and the second network device are external border gateway protocol EBGP neighbors, or the apparatus and the second network device are internal border gateway protocol IBGP neighbors.

In a possible implementation, the apparatus is a first route reflector RR.

The first network device to which the apparatus 500 is applied is the first route reflector RR, for example, is the second node 202 or the third node 203.

In a possible implementation, the apparatus is a level-1 RR or a level-2 RR.

The first network device to which the apparatus 500 is applied is the level-1 RR or the level-2 RR. For example, the first network device is the second node 202 or the third node 203.

In a possible implementation, the third network device is a first provider edge PE device, and the second network device is a second RR or a second PE device. For example, the third network device is the first node 201, and the second network device is the second node 202 or the third node 203.

In a possible implementation, the apparatus and the second network device are network devices used in a multicast virtual private network MVPN scenario.

The first network device used in the apparatus 500 and the second network device may be network devices in the MVPN network.

For specific executable functions and implementation of the packet transmission apparatus 500, refer to corresponding descriptions about the first network device in the embodiment shown in FIG. 4. Details are not described herein again.

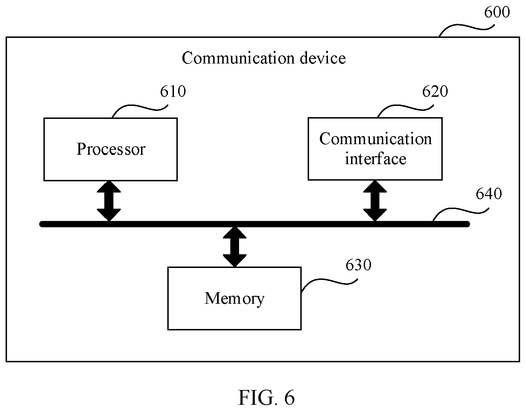

FIG. 6 is a schematic diagram of a structure of a communication device according to an embodiment of this application. The communication device may be the first node 201, the second node 202, the third node 203, or the fourth node 204 in the embodiment shown in FIG. 3, may be the first network device, the second network device, or the third network device in the embodiment shown in FIG. 4, or may be a device implementation of the packet transmission apparatus 500 in the embodiment shown in FIG. 5.

Refer to FIG. 6. The communication device 600 includes at least a processor 610. The communication device 600 may further include a communication interface 620 and a memory 630. There may be one or more processors 610 in the communication device 600, and one processor is used as an example in FIG. 6. In this embodiment of this application, the processor 610, the communication interface 620, and the memory 630 may be connected by using a bus system or in another manner. In FIG. 6, for example, a bus system 640 is used for connection.

The processor 610 may be a CPU, an NP, or a combination of the CPU and the NP. The processor 610 may further include a hardware chip. The hardware chip may be an application-specific integrated circuit (application-specific integrated circuit, ASIC), a programmable logic device (programmable logic device, PLD), or a combination thereof. The PLD may be a complex programmable logic device (complex programmable logic device, CPLD), a field-programmable logic gate array (field-programmable gate array, FPGA), generic array logic (generic array logic, GAL), or any combination thereof.

When the communication device is a first network device, the processor 610 may perform related functions in the foregoing method embodiments, for example, obtaining a first BGP route and recursing the first BGP route.

The communication interface 620 is configured to receive and send a packet. Specifically, the communication interface 620 may include a receiving interface and a sending interface. The receiving interface may be configured to receive a packet, and the sending interface may be configured to send a packet. There may be one or more communication interfaces 620.

The memory 630 may include a volatile memory (English: volatile memory), for example, a random access memory (random access memory, RAM). The memory 630 may alternatively include a non-volatile memory (English: non-volatile memory), for example, a flash memory (English: flash memory), a hard disk drive (hard disk drive, HDD), or a solid-state drive (solid-state drive, SSD). The memory 630 may further include a combination of the foregoing types of memories. For example, the memory 630 may store the foregoing first BGP route.

Optionally, the memory 630 stores an operating system and a program, an executable module, or a data structure, a subset thereof, or an extended set thereof. The program may include various operation instructions for implementing various operations. The operating system may include various system programs, to implement various basic services and process a hardware-based task. The processor 610 may read the program in the memory 630, to implement the packet transmission method provided in embodiments of this application.

The memory 630 may be a storage device in the communication device 600, or may be a storage apparatus independent of the communication device 600.

The bus system 640 may be a peripheral component interconnect (peripheral component interconnect, PCI) bus, an extended industry standard architecture (extended industry standard architecture, EISA) bus, or the like. The bus system 640 may be classified into an address bus, a data bus, a control bus, and the like. For ease of indication, the bus is indicated by using only one bold line in FIG. 6. However, it does not indicate that there is only one bus or only one type of bus.

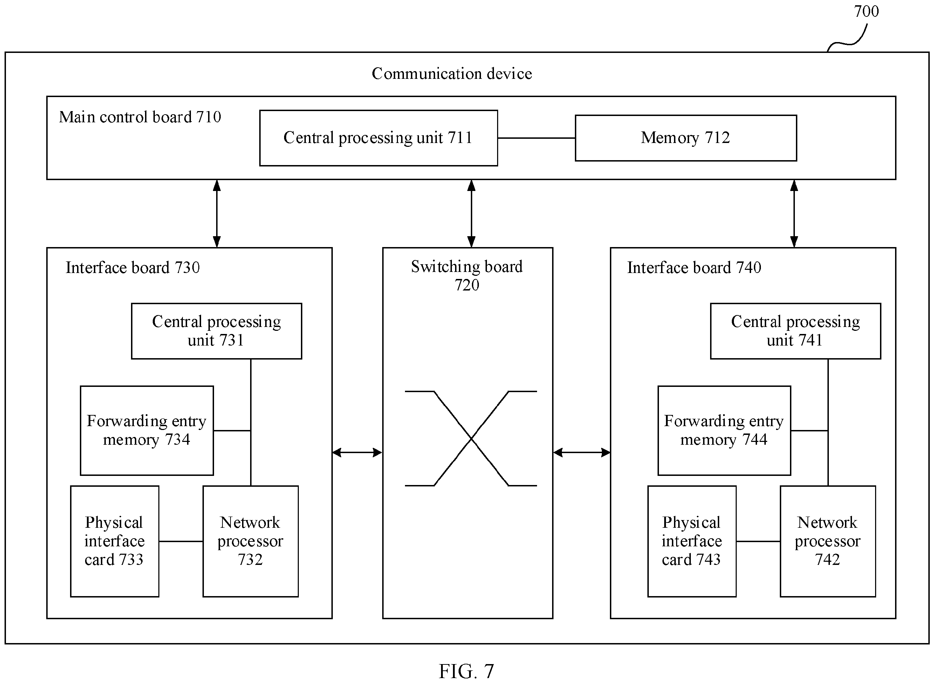

FIG. 7 is a schematic diagram of a structure of another communication device 700 according to an embodiment of this application. The communication device 700 may be configured as the first node 201, the second node 202, the third node 203, or the fourth node 204 in the foregoing embodiment, may be the first network device, the second network device, or the third network device in the foregoing embodiment, or may be a device implementation of the packet transmission apparatus 500 in the embodiment shown in FIG. 5.

The communication device 700 includes a main control board 710 and an interface board 730.

The main control board 710 is also referred to as a main processing unit (main processing unit, MPU) or a route processor card (route processor card). The main control board 710 performs control and management on components of the communication device 700, including functions of route calculation, device management, device maintenance, and protocol processing. The main control board 710 includes a central processing unit 711 and a memory 712.

The interface board 730 is also referred to as a line processing unit (line processing unit, LPU), a line card (line card), or a service board. The interface board 730 is configured to provide various service interfaces and implement data packet forwarding. The service interface includes but is not limited to an Ethernet interface, a POS (Packet over SONET/SDH) interface, and the like. The Ethernet interface is, for example, a flexible Ethernet service interface (Flexible Ethernet Client, FlexE Client). The interface board 730 includes a central processing unit 731, a network processor 732, a forwarding entry memory 734, and a physical interface card (physical interface card, PIC) 733.

The central processing unit 731 on the interface board 730 is configured to control and manage the interface board 730 and communicate with the central processing unit 711 on the main control board 710.

The network processor 732 is configured to implement packet forwarding processing. A form of the network processor 732 may be a forwarding chip. Specifically, processing on an uplink packet includes processing at a packet ingress interface and forwarding table searching, and processing on a downlink packet includes forwarding table searching and the like.

The physical interface card 733 is configured to implement a physical layer interconnection function. Original traffic enters the interface board 730 from the physical interface card 733, and a processed packet is sent out from the physical interface card 733. The physical interface card 733 includes at least one physical interface. The physical interface is also referred to as a physical port. The physical interface card 733 corresponds to a FlexE physical interface 204 in a system architecture 200. The physical interface card 733, also referred to as a subcard, may be mounted on the interface board 730, and is responsible for converting an optical/electrical signal into a packet, performing validity check on the packet, and forwarding the packet to the network processor 732 for processing. In some embodiments, the central processing unit 731 on the interface board 730 may also perform a function of the network processor 732, for example, implement software forwarding based on a general-purpose CPU, so that the network processor 732 is not required in the physical interface card 733.

Optionally, the communication device 700 includes a plurality of interface boards. For example, the communication device 700 further includes an interface board 740. The interface board 740 includes a central processing unit 741, a network processor 742, a forwarding entry memory 744, and a physical interface card 743.

Optionally, the communication device 700 further includes a switching board 720. The switching board 720 may also be referred to as a switch fabric unit (switch fabric unit, SFU). When the network device has the plurality of interface boards 730, the switching board 720 is configured to complete data exchange between the interface boards. For example, the interface board 730 and the interface board 740 may communicate with each other via the switching board 720.

The main control board 710 is coupled to the interface board 730. For example, the main control board 710, the interface board 730, the interface board 740, and the switching board 720 are connected to a system backplane by using a system bus to implement interworking. In a possible implementation, an inter-process communication protocol (inter-process communication, IPC) channel is established between the main control board 710 and the interface board 730, and communication is performed between the main control board 710 and the interface board 730 through the IPC channel.

Logically, the communication device 700 includes a control plane and a forwarding plane. The control plane includes the main control board 710 and the central processing unit 731. The forwarding plane includes components that perform forwarding, such as the forwarding entry memory 734, the physical interface card 733, and the network processor 732. The control plane performs functions such as routing, generating a forwarding table, processing signaling and a protocol packet, and configuring and maintaining a device status. The control plane delivers the generated forwarding table to the forwarding plane. At the forwarding plane, by performing table lookup based on the forwarding table delivered by the control plane, the network processor 732 forwards a packet received by the physical interface card 733. The forwarding table delivered by the control plane may be stored in the forwarding entry memory 734. In some embodiments, the control plane and the forwarding plane may be completely separated, and are not on a same device.

When the communication device 700 is configured as the first network device, the central processing unit 711 may obtain a first BGP route and recurse the first BGP route. The network processor 732 may trigger the physical interface card 733 to forward the first BGP route to a second network device.

It should be understood that the sending unit 502 and the like in the packet transmission apparatus 500 may be equivalent to the physical interface card 733 or the physical interface card 743 in the communication device 700; and the obtaining unit 501, the processing unit 503, and the like in the packet transmission apparatus 700 may be equivalent to the central processing unit 711 or the central processing unit 731 in the communication device 700.

It should be understood that, in this embodiment of this application, an operation on the interface board 740 is consistent with an operation on the interface board 730. For brevity, details are not described again. It should be understood that the communication device 700 in this embodiment may correspond to the first network device, the second network device, or the third network device in the foregoing method embodiments. The main control board 710, and the interface board 730 and/or the interface board 740 in the communication device 700 may implement the functions and/or the steps implemented by the first network device, the second network device, or the third network device in the foregoing method embodiments. For brevity, details are not described herein.

It should be understood that, there may be one or more main control boards. When there are a plurality of main control boards, the main control boards may include an active main control board and a standby main control board. There may be one or more interface boards; and a network device having a stronger data processing capability provides more interface boards. There may also be one or more physical interface cards on the interface board. There may be no switching board or one or more switching boards. When there are a plurality of switching boards, load balancing and redundancy backup may be implemented together. In a centralized forwarding architecture, the network device may not need the switching board, and the interface board provides a function of processing service data in an entire system. In a distributed forwarding architecture, the network device may have at least one switching board, and data exchange between a plurality of interface boards is implemented by using the switching board, to provide a large-capacity data exchange and processing capability. Therefore, a data access and processing capability of the network device in the distributed architecture is better than that of the device in the centralized architecture. Optionally, the network device may alternatively be in a form in which there is only one card. To be specific, there is no switching board, and functions of the interface board and the main control board are integrated on the card. In this case, the central processing unit on the interface board and the central processing unit on the main control board may be combined to form one central processing unit on the card, to perform functions obtained by combining the two central processing units. This form of device (for example, a network device such as a low-end switch or a router) has a weak data exchange and processing capability. Which architecture is specifically used depends on a specific networking deployment scenario.

In some possible embodiments, the first network device, the second network device, or the third network device may be implemented as a virtualized device. For example, the virtualized device may be a virtual machine (English: Virtual Machine, VM) on which a program having a packet sending function is run, and the virtual machine is deployed on a hardware device (for example, a physical server). The virtual machine is a complete software-simulated computer system that has complete hardware system functions and that runs in an entirely isolated environment. The virtual machine may be configured as the first network device or the second network device. For example, the first network device, the second network device, or the third network device may be implemented based on a general-purpose physical server in combination with a network functions virtualization (Network Functions Virtualization, NFV) technology. The first network device, the second network device, or the third network device is a virtual host, a virtual router, or a virtual switch. After reading this application, with reference to the NFV technology, a person skilled in the art may virtualize, on the general-purpose physical server, the first network device, the second network device, or the third network device that has the foregoing functions. Details are not described herein.

It should be understood that the network devices in the foregoing product forms separately have any function of the first network device, the second network device, or the third network device in the foregoing method embodiments. Details are not described herein.

An embodiment of this application further provides a chip, including a processor and an interface circuit. The interface circuit is configured to receive instructions and transmit the instructions to the processor. The processor may be, for example, a specific implementation form of the packet transmission apparatus 500 shown in FIG. 5, and may be configured to perform the foregoing packet transmission method. The processor is coupled to a memory, and the memory is configured to store a program or the instruction. When the program or the instructions are executed by the processor, the chip system is enabled to implement the method in any one of the foregoing method embodiments.

Optionally, there may be one or more processors in the chip system. The processor may be implemented by using hardware, or may be implemented by using software. When the processor is implemented by using the hardware, the processor may be a logic circuit, an integrated circuit, or the like. When the processor is implemented by using the software, the processor may be a general-purpose processor, and is implemented by reading software code stored in the memory.

Optionally, there may also be one or more memories in the chip system. The memory may be integrated with the processor, or may be disposed separately from the processor. This is not limited in this application. For example, the memory may be a non-transitory processor, for example, a read-only memory ROM. The memory and the processor may be integrated into a same chip, or may be separately disposed on different chips. A type of the memory and a manner of disposing the memory and the processor are not specifically limited in this application.

For example, the chip system may be a field programmable gate array (field programmable gate array, FPGA), an application-specific integrated chip (application-specific integrated circuit, ASIC), a system on a chip (system on chip, SoC), a central processing unit (central processing unit, CPU), a network processor (network processor, NP), a digital signal processing circuit (digital signal processor, DSP), a micro controller unit (micro controller unit, MCU), a programmable controller (programmable logic device, PLD), or another integrated chip.

An embodiment of this application further provides a computer-readable storage medium, including instructions or a computer program. When the instructions or the computer program is run on a computer, the computer is enabled to perform the packet transmission method according to the foregoing embodiments.

An embodiment of this application further provides a computer program product including instructions or a computer program. When the computer program product is run on a computer, the computer is enabled to perform the packet transmission method according to the foregoing embodiments.

It should be noted that the embodiments in this specification are described in a progressive manner, each embodiment focuses on a difference from other embodiments, and for same or similar parts in the embodiments, refer to these embodiments. The system or apparatus disclosed in the embodiments corresponds to the method disclosed in the embodiments, and therefore is briefly described. For related parts, refer to the descriptions of the method.

It should be understood that, in this application, "at least one" means one or more, and "a plurality of" means two or more. The term "and/or" is used for describing an association relationship between associated objects, and represents that three relationships may exist. For example, "A and/or B" may represent the following three cases: Only A exists, only B exists, and both A and B exist, where A and B may be singular or plural. The character "/" usually indicates an "or" relationship between the associated objects. "At least one item (piece) of the following" or a similar expression thereof means any combination of these items, including a singular item (piece) or any combination of plural items (pieces). For example, at least one (piece) of a, b, or c may represent: a, b, c, "a and b", "a and c", "b and c", or "a, b, and c", where a, b, and c may be singular or plural.

It should be noted that in this specification, relational terms such as first and second are used to only distinguish one entity or operation from another, and do not necessarily require or imply that any actual relationship or sequence exists between these entities or operations. Moreover, the terms "include", "contain", or any other variant thereof is intended to cover a non-exclusive inclusion, so that a process, a method, an article, or a device that includes a list of elements not only includes those elements but also includes other elements that are not expressly listed, or further includes elements inherent to such a process, method, article, or device. An element preceded by "includes a ..." does not, without more constraints, preclude the existence of additional identical elements in the process, method, article, or device that includes the element.

In combination with the embodiments disclosed in this specification, the methods or the algorithm steps may be implemented by using hardware, a software module executed by a processor, or a combination thereof. The software module may be placed in a random access memory (RAM), a memory, a read-only memory (ROM), an electrically programmable ROM, an electrically erasable and programmable ROM, a register, a hard disk drive, a mobile disk, a CD-ROM, or any other form of storage medium known to the technical domain.

The embodiments disclosed above are described to enable a person skilled in the art to implement or use this application. Various modifications made to the embodiments will be obvious to a person skilled in the art, and the general principles defined herein may also be implemented in other embodiments without departing from the spirit or scope of this application. Therefore, this application will not be limited to the embodiments described in this specification but extends to the widest scope that complies with the principles and novelty disclosed in this specification.

## Claims

1. A packet transmission method, comprising:
obtaining, by a first network device, a first border gateway protocol BGP route; and
directly forwarding, by the first network device, the first BGP route to a second network device without recursing the first BGP route; or still forwarding, by the first network device, the first BGP route to the second network device when the first network device fails to recurse the first BGP route.

2. The method according to claim 1, wherein when the first network device successfully recurses the first BGP route, the method further comprises:
guiding, by the first network device, traffic forwarding based on the first BGP route.

3. The method according to claim 1 or 2, wherein the first network device has a route reflection function.

4. The method according to any one of claims 1 to 3, wherein the first BGP route is used in a segment routing over internet protocol version 6 SRv6 network, and the first BGP route comprises a first segment identifier SID used to indicate a destination network device.

5. The method according to claim 4, wherein the still forwarding, by the first network device, the first BGP route to the second network device when the first network device fails to recurse the first BGP route comprises:
determining, by the first network device based on the fact that the first SID is not locally stored, that the first BGP route fails to be recursed; and
forwarding, by the first network device, the first BGP route to the second network device.

6. The method according to claim 4 or 5, wherein when the first network device successfully recurses the first BGP route, the method further comprises:
replacing, by the first network device, the first SID in the first BGP route with a second SID, to obtain an updated first BGP route; and
sending, by the first network device, the updated first BGP route to the second network device.

7. The method according to claim 3, wherein
the obtaining, by a first network device, a first BGP route comprises: obtaining, by the first network device, the first BGP route from a third network device; and
the guiding, by the first network device, traffic forwarding based on the first BGP route comprises: determining, by the first network device based on the first BGP route, an egress port used to reach the third network device, to guide forwarding of traffic sent to the third network device.

8. The method according to any one of claims 2 to 7, wherein the first network device and the second network device are network devices on a segment routing over internet protocol version 6-best effort SRv6-BE tunnel; or the first network device and the second network device are network devices on a segment routing over internet protocol version 6-traffic engineering SRv6-TE tunnel.

9. The method according to claim 1, wherein the first BGP route is received from a third network device, and a segment routing over internet protocol version 6-best effort SRv6-BE tunnel is established between the third network device and the second network device; or a segment routing over internet protocol version 6-traffic engineering SRv6-TE tunnel is established between the third network device and the second network device.

10. The method according to any one of claims 1 to 9, wherein the first network device and the second network device are external border gateway protocol EBGP neighbors, or the first network device and the second network device are internal border gateway protocol IBGP neighbors.

11. The method according to any one of claims 1 to 10, wherein the first network device is a first route reflector RR.

12. The method according to claim 11, wherein the first network device is a level-1 RR or a level-2 RR.

13. The method according to any one of claims 7 to 11, wherein the third network device is a first provider edge PE device, and the second network device is a second RR or a second PE device.

14. The method according to claim 1, wherein the first network device and the second network device are network devices used in a multicast virtual private network MVPN scenario.

15. A packet transmission apparatus, comprising:
an obtaining unit, configured to obtain a first border gateway protocol BGP route; and
a sending unit, configured to directly forward the first BGP route to a second network device without recursing the first BGP route, wherein
the sending unit is further configured to still forward the first BGP route to the second network device when the first BGP route fails to be recursed.

16. The apparatus according to claim 15, wherein when the first BGP route is successfully recursed, the sending unit is further configured to guide traffic forwarding based on the first BGP route.

17. The apparatus according to claim 15 or 16, wherein the apparatus has a route reflection function.

18. The apparatus according to any one of claims 15 to 17, wherein the first BGP route is used in a segment routing over internet protocol version 6 SRv6 network, and the first BGP route comprises a first segment identifier SID used to indicate a destination network device.

19. The apparatus according to claim 18, wherein when the first BGP route fails to be recursed, the sending unit is specifically configured to: determine, based on the fact that the first SID is not locally stored, that the first BGP route fails to be recursed; and forward the first BGP route to the second network device.

20. The apparatus according to claim 18 or 19, wherein when the first BGP route is successfully recursed, the apparatus further comprises:
a processing unit, configured to replace the first SID in the first BGP route with a second SID, to obtain an updated first BGP route; and
the sending unit is configured to send the updated first BGP route to the second network device.

21. The apparatus according to claim 17, wherein the obtaining unit is specifically configured to obtain the first BGP route from a third network device; and
the sending unit is specifically configured to determine, based on the first BGP route, an egress port used to reach the third network device, to guide forwarding of traffic sent to the third network device.

22. The apparatus according to any one of claims 16 to 21, wherein the apparatus and the second network device are network devices on a segment routing over internet protocol version 6-best effort SRv6-BE tunnel; or the apparatus and the second network device are network devices on a segment routing over internet protocol version 6-traffic engineering SRv6-TE tunnel.

23. The apparatus according to claim 15, wherein the first BGP route is received from a third network device, and a segment routing over internet protocol version 6-best effort SRv6-BE tunnel is established between the third network device and the second network device; or a segment routing over internet protocol version 6-traffic engineering SRv6-TE tunnel is established between the third network device and the second network device.

24. The apparatus according to any one of claims 15 to 23, wherein the apparatus and the second network device are external border gateway protocol EBGP neighbors, or the apparatus and the second network device are internal border gateway protocol IBGP neighbors.

25. The apparatus according to any one of claims 15 to 24, wherein the apparatus is a first route reflector RR.

26. The apparatus according to claim 25, wherein the apparatus is a level-1 RR or a level-2 RR.

27. The apparatus according to any one of claims 21 to 25, wherein the third network device is a first provider edge PE device, and the second network device is a second RR or a second PE device.

28. The apparatus according to claim 15, wherein the apparatus and the second network device are network devices used in a multicast virtual private network MVPN scenario.

29. A communication device, comprising a processor and a memory, wherein
the memory is configured to store computer-readable instructions or a computer program; and
the processor is configured to read the computer-readable instructions or the computer program, to enable the communication device to implement the packet transmission method according to any one of claims 1 to 14.

30. A computer-readable storage medium, comprising instructions or a computer program, wherein when the instructions or the computer program is run on a computer, the computer is enabled to perform the packet transmission method according to any one of claims 1 to 14.
